# EUROPÄISCHE PATENTSCHRIFT

(11) **EP 0 678 400 B1**
(45) Veröffentlichungstag und Bekanntmachung des Hinweises auf die Patenterteilung: **24.05.2000**
(21) Anmeldenummer: 95104213.4
(22) Anmeldetag: 22.03.1995
(51) Int. Cl.: B42D 15/10

(54) **Vor unerlaubter Reproduktion mit einem Kopiergerät geschützte Ausweiskarte**
Identity card protected against unauthorised reproduction by a photocopier
Carte d'identité protégée contre la reproduction interdite par photocopieur

(30) Priorität: 25.03.1994 DE 4410431
(43) Veröffentlichungstag der Anmeldung: 25.10.1995
(60) Teilanmeldung: 99116695.0
(73) Patentinhaber: Giesecke & Devrient GmbH, 81677 München (DE)
(72) Erfinder: Solmsdorf, Bernhard, D-89440 Lutzingen (DE)
(74) Vertreter: Klunker . Schmitt-Nilson . Hirsch

(56) Entgegenhaltungen:
- EP-A- 0 159 828
- EP-A- 0 253 089
- EP-A- 0 319 157
- EP-A- 0 372 274
- DE-A- 2 907 004
- DE-A- 4 131 964
- GB-A- 2 033 839

## Beschreibung

Die Erfindung betrifft eine Ausweiskarte oder einen ähnlichen Datenträger mit einem, in wenigstens einem Teilbereich vorgesehenen Kopierschutzelement, welches eine Metallschicht enthält, in die Kennzeichnungen in Form von Zeichen, Mustern oder ähnlichem mit einem Laserstrahl eingebracht sind.

Ausweiskarten in Form von Kreditkarten, Bankkarten, Barzahlungskarten, Berechtigungskarten, Personalausweisen, Paßpersonalisierungsseiten oder dergleichen werden in den verschiedensten Gebieten eingesetzt, zu denen z. B. der bargeldlose Zahlungsverkehr, Zugangskontrollsysteme oder verschiedene Dienstleistungssysteme gehören. Diese Ausweiskarten weisen in der Regel auf den Karteninhaber bezogene Daten auf, die beim sogenannten Personalisierungsvorgang aufgebracht werden. Eine verbreitete Form, diese Daten aufzubringen, besteht darin, die Daten mittels eines Laserstrahls in die Karte einzuschreiben.

So beschreibt die DE-AS 2 907 004 eine Ausweiskarte mit zwei Deckfolien und einem Karteninlett, in welches durch eine der beiden Deckfolien hindurch mit einem Laserstrahl die Personalisierungsdaten eingeschrieben werden. Auf das Karteninlett können auf diese Weise nach Fertigstellung der Karte in einem letzten Arbeitsgang die Personalisierungs- oder Bilddaten des Inhabers eingebracht werden.

Da die Qualität der Reproduktionen, die mit Kopiergeräten neuerer Bauart gefertigt werden, sehr stark angewachsen ist, besteht zunehmend das Bedürfnis, solche Ausweiskarten so herzustellen oder mit Merkmalen auszugestalten, daß eine Reproduktion der Personalisierungsdaten oder anderer auf der Karte aufgebrachter Daten verhindert wird.

In der FR 2565268 A1 wurde für diese Zwecke bereits vorgeschlagen, auf Dokumente einen metallischen Untergrund aufzubringen, auf den die zu schützenden Informationen aufgedruckt werden. Ein solcher metallischer Untergrund verursacht eine gerichtete Reflexion der auf die metallische Fläche fallenden Lichtstrahlen. Der Detektor in Kopiergeräten ist üblicherweise so angeordnet, daß er die von der Vorlage diffus rückgestreuten Lichtanteile erfassen kann, nicht jedoch das in ein definiertes Raumwinkelelement reflektierte Licht. Metallische Flächen führen also bei Reproduktion durch einen Kopierer statt zu einer metallisch reflektierenden zu einer schwarzen Fläche auf der Kopie.

Aus der US-PS 4,680,459 ist bereits eine Karte bekannt, auf die ein Streifen aufgebracht ist, der zur Laseraufzeichnung von Informationen geeignet ist. Dieser Streifen weist eine in seinem Innern liegende Metallschicht auf, in die mit Hilfe eines Laserstrahls in Form eines Punktmusters Mikroschriftzüge oder Grafiken eingeschrieben werden.

In der DE 41 31 964 A1 wird ein Verfahren zur Individualisierung von Prägehologrammen beschrieben. Dabei wird eine Kunststoffolie mit einer sehr dünnen, transparenten Metallschicht versehen, in welche eine Hologrammstruktur geprägt wird. Zur Individualisierung wird das Hologramm an bestimmten Stellen mit einem Laserstrahl zerstört. Das Vorhandensein bzw. das aufgrund der Zerstörung Ausbleiben der Hologramminformation wird als maschinenlesbares Signal zur Echtheitserkennung genutzt.

Aufgabe der Erfindung ist es, eine Ausweiskarte vorzuschlagen, die qualitativ hochwertige Kennzeichnungen wie Zeichen, Muster, Fotos oder ähnliches aufweist, mit einem weiterentwickeltem Schutz vor elektrofotografischer Reproduktion zu versehen ist, deren Herstellung einfach ist und die in einem letzten Arbeitsgang mit Kennzeichnungen versehen werden kann.

Die Lösung dieser Aufgabe ist den kennzeichnenden Teilen der unabhängigen Ansprüche zu entnehmen. Spezielle Ausführungsformen und Weiterbildungen sind Gegenstand der Unteransprüche.

Der Grundgedanke der Erfindung besteht darin, eine Ausweiskarte vor elektrofotografischer Reproduktion dadurch zu schützen, daß der von einer dünnen Metallschicht ausgehende Kopierschutzeffekt mit den physikalischen, insbesondere optischen Eigenschaften einer weiteren Schicht kombiniert wird, deren Zusammenspiel dazu führt, daß die Ausweiskarte nicht oder nicht originalgetreu wiedergegeben wird. So können beispielsweise in eine Metallschicht Kennzeichnungen, wie Informationen, Bilder, Zeichen, Muster, Logos oder ähnliches mit Hilfe eines Laserstrahls eingebracht werden, so daß die Kennzeichnungen in Form einer lokal demetallisierten Metallschicht vorliegen und die demetallisierten Bereiche mit Teilen einer weiteren Schicht, die eine einfallende Strahlung im wesentlichen absorbieren oder gerichtet reflektieren, so zusammenwirken, daß sie visuell gut erkennbar sind, jedoch elektrofotografisch nicht oder nicht originalgetreu reproduziert werden können.

Wegen der oben bereits erwähnten gerichteten Reflexion von Lichtstrahlen, die auf eine Metallschicht fallen, kann der Detektor eines Kopiergeräts diese Strahlung nicht aufnehmen. Daher wird die Metallschicht von Farb- oder Schwarz-Weiß-Kopiergeräten nicht bzw. farblich und in ihrem Glanz nicht richtig wiedergegeben. Kennzeichnungen, die durch Entfernen der Metallschicht eingebracht werden, haben zwar einen hohen Kontrast zur Metallschicht und garantieren damit eine gute Lesbarkeit, jedoch geht gerade an den Stellen der Kennzeichnungen der Kopierschutzeffekt, der durch die gerichtete Reflexion der Metallschicht verursacht wird, verloren. Der besondere Sicherungseffekt besteht nun darin, daß beispielsweise ein unter der Kennzeichnung liegender Materialbereich so ausgestaltet ist, daß er eine einfallende Strahlung des sichtbaren Spektralbereichs absorbiert oder gerichtet reflektiert und damit ein Kopieren der Kennzeichnungen verhindert. Dies kann z. B. dadurch erzielt werden, daß die besagten Materialbereiche schwarz eingefärbt oder metallisch reflektierend sind.

Für eine Ausweiskarte gemäß der Erfindung ist es unerheblich, ob durch das Abtragen der Metallschicht, das mit Hilfe eines Lasers durch Schmelzen, Verdampfen oder ähnlichem erfolgen kann, eine darunterliegende, absorbierende oder reflektierende Schicht freigelegt wird oder ob die Teilbereiche einer weiteren Schicht erst durch das Bestrahlen mit dem Laser ihre absorbierende Eigenschaft erhalten. Wichtig ist lediglich, daß zusätzlich zu den metallfreien Bereichen die oben angesprochenen physikalischen Effekte in Teilen einer über oder unter der Metallschicht liegenden Schicht vorhanden sind, so daß eine originalgetreue Reproduktion, d. h. eine identische elektrofotografische Wiedergabe der Karte ausgeschlossen ist. Der Vorteil der erfindungsgemäßen Lösung besteht darin, daß aufgrund der hochglänzenden, dünnen Metallschicht als Informationsschicht qualitativ sehr hochwertige, d. h. scharf konturierte und sehr fein strukturierte Kennzeichnungen hergestellt werden können. Durch die erfindungsgemäße Besonderheit der mit der Metallschicht kombinierten zweiten Schicht sind die Kennzeichnungen überdies gegen elektrofotografische Kopierverfahren geschützt. Die Kennzeichnungen können dabei bevorzugt in die fertiggestellte Karte in einem letzten Arbeitsgang mit einem Laserstrahl oder in ein Transferelement eingebracht werden, das anschließend auf eine fertige Karte übertragen wird.

Die erfindungsgemäße Ausweiskarte bietet damit einen optimalen Schutz vor Reproduktionen mit einem Kopiergerät, da der metallische Hintergrund und die eingebrachten Kennzeichnungen in ihrem optischen Zusammenwirken nicht originalgetreu reproduziert werden können. Es sind also Standardkarten herstellbar, die von dem jeweiligen Kartenherausgebern individualisiert und personalisiert werden können. Da die Personalisierung der Karte üblicherweise mit einem Laserstrahl erfolgt, ist zudem kein zusätzlicher Aufwand erforderlich, um die erfindungsgemäße Ausweiskarte mit den Kopierschutzmerkmalen zu versehen.

Wird beispielsweise in eine schwarz hinterlegte, hochglänzende Metallschicht ein sogenanntes Negativ-Halbtonportrait eingeschrieben, indem die Bereiche der Metallschicht mit dem Laser entfernt werden, die in der Vorlage dunkel sind, erhält man ein qualitativ hochwertiges Bild, das aufgrund der geschilderten Eigenschaften in einer Kopie als durchgehend schwarze Fläche erscheint.

Eine weitere Lösung der Aufgabe besteht darin, die Metallschicht unbeschädigt zu belassen und lediglich in eine über der Metallschicht liegende transparente und dünne Schicht Kennzeichnungen einzubringen, die die Metallschicht lokal vollständig abdecken und gleichzeitig für Strahlung des sichtbaren Spektralbereichs absorbierend wirken. Besonders geeignet ist dabei das Schwärzen einer für die Bestrahlung mit einem Laser sensibilisierten Schicht, wie etwa einer dünnen, mit Zusatzstoffen versehenen transparenten Lackschicht.

Weitere Vorteile und besondere Ausführungsformen der Erfindung ergeben sich aus den nachfolgenden Beispielen, die anhand der Figuren erläutert werden, bei deren Darstellung bewußt auf eine maßstabsgetreue Widergabe verzichtet wurde, um die Anschaulichkeit zu erhöhen.

Es zeigen:
- Fig. 1: eine erfindungsgemäße Ausweiskarte
- Fig. 2: eine weitere Ausführungsform der erfindungsgemäßen Ausweiskarte
- Fig. 3 bis 6: Schnittdarstellungen einer erfindungsgemäßen Ausweiskarte
- Fig. 7 und 8: eine Schnittdarstellung durch ein Transferelement
- Fig. 9: Schnittdarstellung einer erfindungsgemäßen Ausweiskarte.

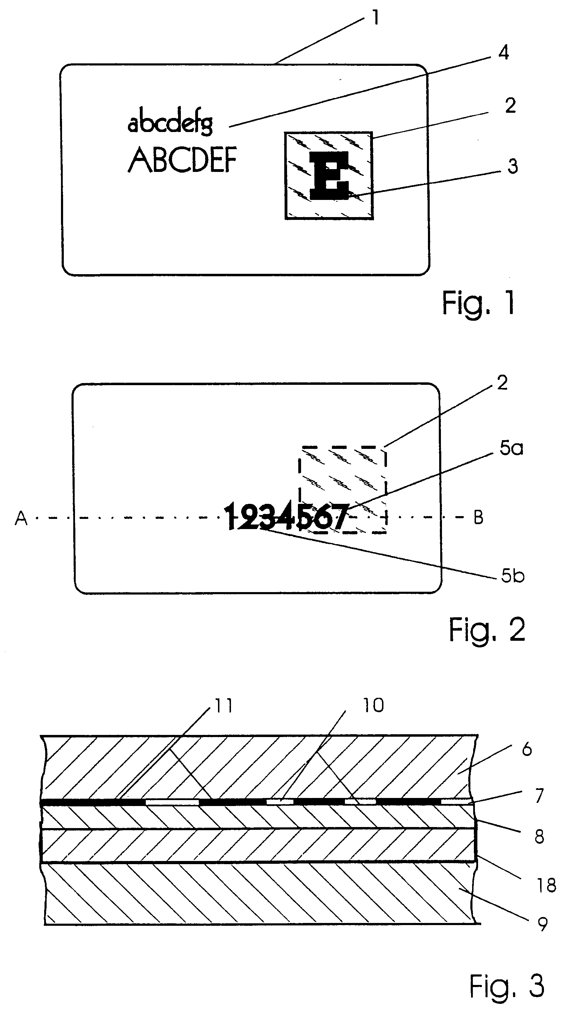

Fig. 1 zeigt schematisch eine erfindungsgemäße Ausweiskarte 1, die mit einem im Transferverfahren auf die Deckschicht der Ausweiskarte aufgebrachten Kopierschutzelement 2 versehen ist. In die metallische Schicht des Kopierschutzelements ist mit Hilfe eines Laserstrahls eine Kennzeichnung 3 eingebracht, die im vorliegenden Fall als Buchstabe "E" ausgeführt ist. Darüber hinaus kann die Karte weitere, personen- oder nichtpersonenbezogene Daten 4 enthalten, die in beliebigen geeigneten Verfahren aufgebracht sein können.

Die Kennzeichnungen werden vorzugsweise so aufgebracht, daß sie alphanumerische Zeichen, Logos, Bilder, das Foto des Inhabers, personenbezogene Daten oder ähnliches bilden.

In Fig. 2 ist eine Ausweiskarte 1 zu sehen, die ein unter einer transparenten Deckschicht der Karte liegendes Kopierschutzelement 2 aufweist. Die Karte 1 wurde mit einem Laserstrahl so beschriftet, daß sich die Kennzeichnungen die hier in Form einer Ziffernreihe vorliegen, aus dem Kopierschutzelement in die Karte hinein fortsetzen. So lassen sich beispielsweise Unterschriftsteile, Bildteile, Datenteile wie z. B. Teile der Personalisierungsdaten als Kennzeichnungen 5a kopiergeschützt im Kopierschutzelement unterbringen, während sich ein zweiter Teil dieser Information 5b außerhalb des Kopierschutzelementes auf der Karte fortsetzt. Mit dieser Ausführungsform kann ein zusätzlicher optischer Sicherungseffekt dadurch erhalten werden, daß die Kennzeichnungen mit zwei optisch unterschiedlich wirkenden Hintergründen versehen sind. Außerdem kann auch der Kennzeichnungsbereich 5a farblich anders gestaltet sein als der Bereich 5b, wobei dennoch beide Teile der Kennzeichnung in einem Arbeitsgang mit einem Laser aufgebracht werden können. Vorzugsweise wird die Laserung im Bereich des Kopierschutzelements reduziert, damit in diesem Bereich die Kennzeichnung ausschließlich in der Metallschicht vorliegt.

In Fig. 3 ist ein schematischer Querschnitt entlang der in Fig. 2 dargestellten Schnittlinie A-B im Bereich des Kopierschutzelementes 2 zu sehen. Unter einer transparenten Kartendeckschicht 6 ist eine Metallschicht 7 angeordnet, die über einer Schicht 8 liegt, die besondere optische Eigenschaften aufweist. Diese Schicht 8 grenzt unmittelbar an eine beispielsweise opake Kartenkernschicht 18, die von der rückwärtigen transparenten Kartendeckschicht 9 abgedeckt ist.

Mit Hilfe eines Laserstrahls wurden in die Schicht 7 Kennzeichnungen 10 durch lokales Demetallisieren der Schicht eingebracht wodurch im Bereich der Kennzeichen die Schicht 8 freigelegt, d. h. sichtbar wird. Durch den Kontrastunterschied zwischen der Metallschicht und der Schicht 8 sind die Kennzeichen vom Auge gut erkennbar. Durch das lokale Entfernen der Metallschicht geht zwar in diesen Bereichen der Kopierschutzeffekt verloren; er wird aber durch die besonderen optischen Eigenschaften der Schicht 8 wieder hergestellt.

In einer ersten Ausführungsform eignen sich hierzu Schichten, welche die vom Kopierer ausgesandten Strahlungen so stark absorbieren, daß in den Detektor des Kopierers keine ausreichende reflektierte Strahlung gelangt, die von den Stellen unter den demetallisierten Bereichen der Karte stammt, so daß eine Reproduktion der Kennzeichnungen nicht möglich ist. Die gerichtete Reflexion der metallisierten Bereiche 11 führt in Kombination mit der stark absorbierenden Schicht 8 nun gerade dazu, daß vom Detektor des Kopierers kein Kontrastunterschied zwischen den Bereichen 10 und 11 erkannt werden kann, so daß die Information in der Kopie völlig verschwindet und der Bereich der Karte, in dem sich das Kopierschutzelement befindet, einheitlich schwarz wiedergegeben wird. In diesem Zusammenhang hat es sich als besonders günstig erwiesen, die Schicht 8 dunkelfarben, insbesondere schwarz einzufärben.

Sofern die Metallschicht 7 bei ihrer Herstellung auf die Kartenrückseite 9 oder eine darüber befindliche Schicht 18, wie beispielsweise die bedruckte Kernschicht der Karte, geklebt wird, hat es sich als vorteilhaft herausgestellt, die Schicht 8 bereits als schwarz eingefärbte Klebeschicht auszuführen.

Des weiteren ist es möglich, die Schicht 8 so zusammenzusetzen, daß sie Fluoreszenz- oder Phosphoreszenzstoffe enthält, die bei einer Bestrahlung mit dem Licht des Kopierers nicht zur Emission von Licht einer Wellenlänge im optisch sichtbaren Spektralbereich veranlaßt werden, d. h. also, deren Anregungsspektrum vom Spektrum der Beleuchtungsquelle des Kopierers abweicht. Die Lumineszenzstoffe sind dabei so zu wählen, daß die Anregung dennoch bei natürlichem Tageslicht erfolgt. Bei dieser Ausführungsform entsteht der verbesserte Kopierschutz durch die falsche Wiedergabe des metallischen Hintergrundes und die Wiedergabe der Kennzeichnungen ohne deren Lumineszenzeigenschaft bei normalem Tageslicht. Der Effekt wird besonders vorteilhaft, wenn die Lumineszenzstoffe in eine schwarze Schicht eingebracht werden.

In einer weiteren Ausführungsform kann die unter der metallischen Schicht 7 liegende Schicht 8 als eine, die einfallende Strahlung gerichtet reflektierende Schicht ausgebildet sein. Besonders geeignet ist hierbei eine metallische Schicht, wenn diese zweite Metallschicht zur ersten optisch kontrastierend wirkt. Bei dem Versuch, die Ausweiskarte zu kopieren, werden die einfallenden Strahlen sowohl von der Schicht 7 wie auch von der Schicht 8 gerichtet reflektiert, so daß auf den Detektor des Kopierers keine diffus gestreuten Strahlungsanteile gelangen können, und das Kopierschutzelement mit den darauf befindlichen Kennzeichnungen vollständig schwarz wiedergegeben wird. Um die zweite Metallschicht beim Einbringen der Kennzeichnungen nicht zu beschädigen, hat es sich als vorteilhaft erwiesen, die beiden Schichten durch eine transparente Zwischenschicht zu trennen.

Für beide metallische Schichten kommen grundsätzlich alle mit Laserstrahlen schmelzbaren Metalle wie Bi, Te, In, Cu, Al, Pt, Au, Ag, Ge, Si, Ga oder deren Legierungen in Betracht, wobei es im Rahmen der Erfindung keine Rolle spielt, ob die Metallschicht aufgedampft, als Folie eingebracht, im Transferverfahren übertragen oder die Ausweiskarte auf andere Weise mit der Metallschicht versehen wird.

Die optisch reflektierenden Eigenschaften der Schicht 8 können auch dadurch bedingt sein, daß diese Schicht Perlglanzpigmente oder Iriodine enthält, die bevorzugt vollflächig aufgedruckt oder anderweitig an der Oberfläche der Metallschicht aufgebracht sind. Diese Stoffe bewirken eine gerichtete Reflexion des einfallenden Lichts und weisen gleichzeitig einen betrachtungswinkelabhängigen Farbeffekt auf.

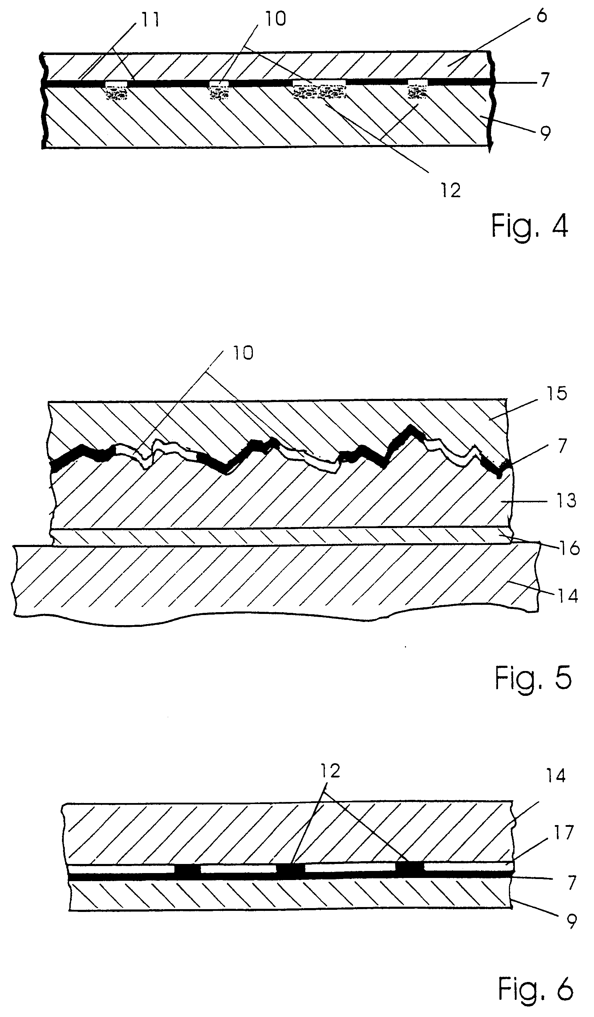

In Fig. 4 ist schematisch ein Ausschnitt aus dem Querschnitt einer weiteren Ausweiskarte dargestellt. Unter einer transparenten Kartendeckschicht 6 ist eine Metallschicht 7 angeordnet, in die mit Hilfe eines Laserstrahls Kennzeichnungen 10 eingebracht wurden. Beim Einbringen der Kennzeichnungen in die Metallschicht wurde der Laserstrahl so gesteuert, daß die Kennzeichen in die darunterliegende Schicht 9 gleichzeitig mitübertragen wurden. Um hierbei optimale Ergebnisse erzielen zu können, ist es zumeist erforderlich, die Schicht 9 für die Laserstrahlung zu sensibilisieren. Hierzu können in die Schicht 9 Zusatzstoffe eingebracht werden, wie beispielsweise organische oder anorganische Pigmente, Farb- oder andere Zusatzstoffe, die dazu führen, daß der Laserstrahl stärker absorbiert wird oder der Zusatzstoff durch die Bestrahlung mit dem Laser zu einer Farbgebung führt. Es ergibt sich wieder ein besonderer Kopierschutz, wenn Laserbestrahlung und Zusatzstoff in der Schicht 9 so aufeinander abgestimmt sind, daß bei der lokalen Entfernung der Schicht 7 die darunterliegende Schicht 9 in der Form der darüberliegenden Kennzeichnung geschwärzt wird.

Sofern das Kopierschutzelement nur in Teilbereichen der Karte vorhanden ist, hat es sich als günstig erwiesen, die Schicht 9 als dünne, mit Zusatzstoffen versehene Lackschicht auszuführen, die eine darunterliegende Kartenkernschicht (nicht gezeigt) abdeckt. Auf der Kartenkernschicht können allgemeine Druckbilddaten vorhanden sein, die mit dem Laserstrahl auch außerhalb des Kopierschutzelementes eingebracht sein können.

Sind die Kennzeichnungen durch das lokale Entfernen einer Metallschicht eingebracht und wird eine darunterliegende schwarze Schicht sichtbar, heben sich die Kennzeichnungen in den demetallisierten Bereichen schwarz von der umliegenden spiegelnd reflektierenden Metallschicht ab. Beim Einbringen von Fotos in eine Ausweiskarte besteht daher die Möglichkeit, den Laserstrahl so zu steuern, daß jeweils die Metallschichten entfernt werden, die in der Originalvorlage dunkel sind. Auf diese Weise entsteht direkt ein Positivbild, während im umgekehrten Fall, also beim Entfernen der Metallschicht in den im Original hellen Bereichen, ein negativer Portraitabzug auf die Karte übertragen werden kann. Um einen besonderen optische Effekt zu erzielen, ist es auch ohne weiteres möglich, den Laserstrahl in verschiedenen Bereichen des aufzubringenden Bildes so zu steuern, daß in unterschiedlichen Teilbereichen des Kopierschutzelements der optische Eindruck eines abwechselnd positiv und negativ aufgebrachten Bildes entsteht.

Bei den oben angeführten Beispielen ist es möglich, das Kopierschutzelement vollständig im Innern einer Karte vorzusehen, sofern die Metallschicht durch eine optisch transparente Deckschicht hindurch sichtbar bleibt. Es ist darüber hinaus auch möglich, das Kopierschutzelement gemäß einem der vorangegangenen Ausführungsbeispiele auf der Oberfläche einer ein- oder mehrschichtigen Ausweiskarte aufzubringen. In beiden Fällen kann sich das Kopierschutzelement entweder lediglich auf Teilbereiche der Karte erstrecken oder aber die Gesamtfläche der Karte einnehmen, so daß alle in einem letzten Arbeitsgang eingebrachten Informationen kopiergeschützt sind.

Sofern das Kopierschutzelement an der Oberfläche einer Ausweiskarte aufgebracht wird, kann es in einer besonderen Ausführungsform auch als Transferhologramm ausgeführt sein. In Fig. 5 ist der Querschnitt einer derartigen Ausweiskarte ausschnittsweise schematisch wiedergegeben. Dabei ist das Transferhologramm auf der Deckfläche einer ein- oder mehrschichtigen Ausweiskarte 14 mit Hilfe einer Klebeschicht 16 aufgebracht. Die holografische Struktur ist in eine Lackschicht 13 eingeprägt, die von einer die identische Struktur tragenden Metallschicht 7 abgedeckt ist. Um das Transferhologramm vor Umwelteinflüssen zu schützen, wird die Metallschicht üblicherweise von einer transparenten Schutzschicht 15 abgedeckt. Erfindungsgemäß wird die Kennzeichnung nun dadurch eingebracht, daß die Metallschicht 7 lokal abgetragen wird, wobei der Laserstrahl so gesteuert wird, daß die darunterliegende Hologrammstruktur der Schicht 13 völlig unbeschädigt bleibt.

Diese Vorgehensweise hat den Vorteil, daß einerseits die Hologrammstruktur auch in den demetallisierten Bereichen vollständig erhalten bleibt und andererseits dennoch eine Kennzeichnung 10 in das Kopierschutzelement eingebracht werden kann. Wird die Schicht 13 nun so ausgeführt, daß sie eine der Eigenschaften der oben bereits beschriebenen Schicht 8 hat, so ist auch mit dieser Ausführungsform der erfindungsgemäß gewünschte verbesserte Kopierschutz erreicht. Denn einerseits führt die eingeprägte holografische Struktur dazu, daß in der Kopie lediglich ein bestimmter Betrachtungswinkel des Hologrammes reproduziert werden kann und damit der winkelabhängige Effekt verlorengeht und damit sind andererseits die Kennzeichnungen 10 nicht originalgetreu reproduzierbar.

In Fig. 6 ist eine weitere Ausführungsform der erfindungsgemäßen Ausweiskarte dargestellt. Unter einer transparenten Deckschicht 14 befindet sich eine für die Laserstrahlung sensibilisierte Schicht 17, in welche Kennzeichnungen 12 mit Hilfe eines Laserstrahls eingebracht wurden, wobei die Kennzeichnungen insbesondere durch lokales Schwärzen der Schicht 17 entstehen. Eine darunterliegende durchgehende Metallschicht 7 wird von der zweiten Kartendeckschicht 9 abgedeckt. Auch bei dieser Ausführungsform der Karte entsteht der besondere Kopierschutzeffekt dadurch, daß die metallische Schicht 7 wegen der ihr anhaftenden gerichteten Reflektion von einfallender Strahlung elektrofotografisch nicht originalgetreu reproduzierbar ist, während sich die Kennzeichnungen 12 mit einem guten Kontrast zur Schicht 7 abheben. Durch die besonderen Eigenschaften der Kennzeichnungen 12, die im vorliegenden Fall darin bestehen, daß die Kennzeichnungen schwarz sind, wird bei dem Versuch, die Karte zu kopieren, im Bereich des Kopierschutzelements wieder eine einheitlich schwarze Fläche erzeugt, aus der die eingebrachten Informationen nicht mehr zu entnehmen sind. Vorzugsweise werden für die Schicht 17 besondere, für die Laserstrahlung sensibilisierte Materialien auf Kunststoffbasis verwendet, wobei besonders auch dünne, transparente Lackschichten geeignet sind, die mit Zusatzstoffen versehen sind.

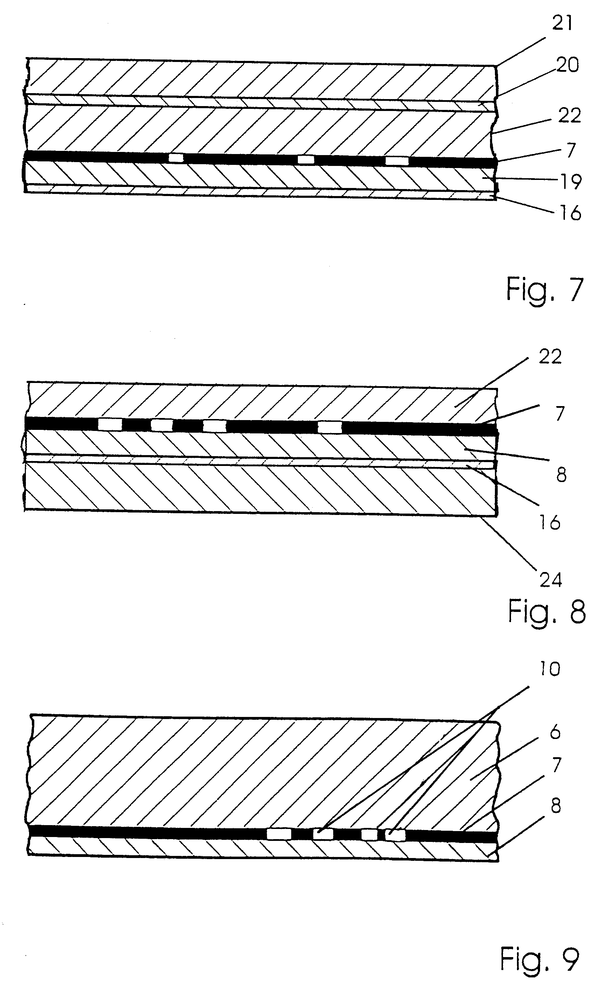

Nach der Erfindung ist es unerheblich, ob das Kopierschutzelement während des Laminierens der Karte in deren Inneres eingebracht oder durch ein Transferverfahren auf die Oberfläche der Karte nach deren Fertigstellung aufgebracht wird. Die Transfertechnik bietet den Vorteil, daß jede Standardkarte mit Hilfe des zusätzlichen Kopierschutzelements zum einen individualisiert und zum anderen vor unerlaubter Reproduktion geschützt werden kann. Ein hierzu geeignetes Transferelement ist in Fig. 7 gezeigt. Auf einer Substratschicht 19 ist eine Metallschicht 7 aufgebracht, die von einer Deckschicht 22, einer Releaseschicht 20 und einer Trägerschicht 21 abgedeckt ist. Ein derartiges Transferelement läßt sich unter Einwirkung von Hitze und Druck auf eine Karte übertragen, wobei die Releaseschicht 20 und die Trägerschicht 21 vom Transferelement abgezogen werden und die Substratschicht 19 des Transferelements mit Hilfe eines Klebers fest mit der Oberfläche der Karte verbunden wird. Der Kleber kann dabei entweder direkt auf die Kartenteile aufgebracht sein, auf die das Transferelement übertragen werden soll. Er kann aber auch als separate Klebeschicht 16 bereits auf dem Transferelement vorgesehen sein und während des Transfervorganges aktiviert werden. Bevorzugt ist das Transferelement Teil eines Transferbandes, auf dem die Elemente in Endlosform oder voneinander beabstandet vorliegen. Das Einschreiben der Kennzeichnungen in die Metallschicht kann nach dem Übertragen des Transferelementes auf die Karte oder direkt auf dem Transferband erfolgen, wobei im letzten Fall das Transferband einer Laserbearbeitungsstation zugeführt wird, in der die Kennzeichnungen auf jedes einzelne Transferelement eingebracht werden. Nach dem Einbringen der Kennzeichnungen gewährleistet die Substratschicht 19, daß die Informationen nicht oder nicht originalgetreu elektrofotografisch reproduziert werden können. Hierzu wird die Substratschicht 19 als Schicht ausgeführt, die eine von außen einfallende Strahlung im wesentlichen absorbiert, wobei die Schicht in einer bevorzugten Ausführungsform schwarz eingefärbt ist.

Während das Transferelement gemäß Fig. 7 bevorzugt mit Hilfe eines maschinellen Verfahrens auf die Kartenoberfläche übertragen wird, ist in Fig. 8 ein Transferelement gezeigt, das auf einer Trägerschicht 24 aufgebracht ist. Das Transferelement selbst besteht aus einer Kleberschicht 16, einer strahlungsabsorbierenden Schicht 8, einer Metallschicht 7 und einer Deckschicht 22, die bevorzugt als Decklackschicht ausgeführt ist. Die Transferelemente können wiederum voneinander beabstandet oder kontinuierlich auf dem Trägerband 24 vorliegen. Die Transferelemente können einzeln von der Trägerfolie von Hand abgezogen und auf die Karte übertragen werden. Die Kennzeichnungen lassen sich wiederum, wie bereits beschrieben, vor oder nach dem Übertragen auf die Karte in die Metallschicht mit Hilfe eines Laserstrahls einbringen.

Fig. 9 zeigt eine weitere Ausführungsform der erfindungsgemäßen Karte im Querschnitt. Hierbei wird die Ausweiskarte im wesentlichen aus einer transparenten Deckschicht 6 gefertigt, die auf ihrer Rückseite von einer dünnen reflektierenden Metallschicht 7 und einer ebenfalls dünnen, stark absorbierenden Schicht 8 abgedeckt wird. Die Deckschicht kann darüber hinaus an ihrer Oberfläche oder Rückseite mit einem beliebigen Designdruck versehen sein, wobei jedoch darauf zu achten ist, daß der Druck so ausgestaltet wird, daß wenigstens ein sogenanntes Durchsichtsfenster frei bleibt, welches den freien Blick auf das Kopierschutzelement in dem Bereich ermöglicht, in dem die Kennzeichungen 10 eingebracht werden. Bei einer derartigen Karte ist die Dicke der Karte im wesentlichen durch die Dicke der Schicht 6 bestimmt, die je nach ausgewähltem Material und Verwendungszweck der Karte zwischen 0,5 und 1 mm betragen kann.

In einer Modifikation dieser Ausführungsform kann auf das Aufbringen der Schicht 8 verzichtet werden oder an Stelle der absorbierenden Schicht 8 eine beliebige Schicht aufgebracht werden, wenn das Einbringen der Kennzeichnungen nicht durch das Entfernen der reflektierenden Schicht 7 erfolgt, sondern die darüberliegende Schicht 6, wie bereits beschrieben, geschwärzt wird.

Die Metallschicht wird möglichst dünn gewählt, wobei jedoch zu berücksichtigen ist, daß sie mindestens so dick sein muß, daß die Metallschicht nicht mehr transparent wirkt. In diesem Zusammenhang haben sich Schichtdicken von 0,05 bis 1 µm bewährt, wobei für eine Aluminiumschicht bevorzugt Schichtdicken ab ca. 0,1 µm eingesetzt werden. Die Impulsenergie für eine solche Aluminiumschicht liegt bei etwa 0,07 mJoule eines gepulsten Nd:YAG-Lasers, dessen Brennpunktdurchmesser etwa bei 60 µm liegt. Damit läßt sich eine ausreichende Demetallisierung der Schicht im Brennpunkt bei einer Energiedichte von ca. 2 Joule/cm² erzielen. Es ist klar, daß andere Lasertypen mit anderen Energiewerten eingesetzt werden können, die individuell an die jeweils verwendete Schicht und deren Dicke anzupassen sind. Für das Beschriftungsverfahren kommen insbesondere auch Nd:Glass-Laser mit einer Wellenlänge von ca. 1 µm und C0₂Laser mit einer Wellenlänge von 10,6 µm in Frage. Wesentlich bei der Auswahl der Lasertypen und der zu verwendenden Parameter ist lediglich, daß die Metallschicht durch das Bestrahlen mit dem Laser vollständig entfernt werden kann.

## Patentansprüche

1. Ausweiskarte oder ähnlicher Datenträger mit einem, in wenigstens einem Teilbereich vorgesehenen Kopierschutzelement, welches eine einfallendes Licht gerichtet reflektierende Metallschicht enthält, in die Kennzeichnungen in Form von Zeichen, Mustern oder ähnlichem mit einem Laserstrahl durch lokales, vollständiges Entfernen der Metallschicht eingebracht sind, und die Metallschicht zumindest in dem Bereich der Kennzeichnungen mit einer weiteren, dunkelfarbigen Schicht unterlegt ist, wobei die weitere Schicht von einem elektrofotographischen Kopierer ausgesandte Strahlung so absorbiert, daß die Kennzeichnungen auf einer Kopie nicht erkennbar sind.

2. Ausweiskarte oder ähnlicher Datenträger mit einem, in wenigstens einem Teilbereich vorgesehenen Kopierschutzelement, welches eine einfallendes Licht gerichtet reflektierende Metallschicht enthält, in die Kennzeichnungen in Form von Zeichen, Mustern oder ähnlichem mit einem Laserstrahl durch lokales, vollständiges Entfernen der Metallschicht eingebracht sind, und die Metallschicht zumindest in dem Bereich der Kennzeichnungen mit einer weiteren Schicht unterlegt ist, wobei die weitere Schicht innerhalb der Kennzeichnungen vom Laserstrahl geschwärzt ist und von einem elektrofotographischen Kopierer ausgesandte Strahlung so absorbiert, daß die Kennzeichnungen auf einer Kopie nicht erkennbar sind.

3. Ausweiskarte nach Anspruch 1 oder 2, dadurch gekennzeichnet, daß die Metallschicht eine hochglänzende Schicht ist.

4. Ausweiskarte nach Anspruch 1, dadurch gekennzeichnet, daß die weitere Schicht schwarz ist.

5. Ausweiskarte nach Anspruch 1, dadurch gekennzeichnet, daß die weitere Schicht als schwarze Kleberschicht ausgeführt ist.

6. Ausweiskarte nach Anspruch 1 oder 2, dadurch gekennzeichnet, daß die Kennzeichnungen ein von einem Original reproduziertes Halbtonmuster bilden, bei dem wenigstens teilweise die dunklen Bereiche des Originals durch eine Demetallisierung der Metallschicht wiedergegeben sind.

7. Ausweiskarte nach Anspruch 6, dadurch gekennzeichnet, daß die dunklen Bereiche des Originals vollständig durch Demetallisieren der Metallschicht wiedergegeben sind.

8. Ausweiskarte nach Anspruch 6 oder 7, dadurch gekennzeichnet, daß das Halbtonmuster ein Bild ist.

9. Ausweiskarte nach einem der Ansprüche 6 - 8, dadurch gekennzeichnet, daß das Halbtonmuster in Rastertechnik eingebracht wurde.

10. Ausweiskarte nach Anspruch 1, dadurch gekennzeichnet, daß die weitere Schicht Fluoreszenz-oder Phosphoreszenzstoffe enthält, deren Anregungsspektrum vom Spektrum der Beleuchtungsquelle des Kopierers abweicht.

11. Ausweiskarte oder ähnlicher Datenträger mit einem, in wenigstens einem Teilbereich vorgesehenen Kopierschutzelement, welches eine einfallendes Licht gerichtet reflektierende Metallschicht enthält, in die Kennzeichnungen in Form von Zeichen, Mustern oder ähnlichem mit einem Laserstrahl durch lokales, vollständiges Entfernen der Metallschicht eingebracht sind, und die Metallschicht zumindest in dem Bereich der Kennzeichnungen mit einer weiteren, zur Metallschicht optisch kontrastierenden Schicht unterlegt ist, wobei die weitere Schicht einfallendes Licht gerichtet reflektiert, so daß die Kennzeichnungen auf einer elektrofotographischen Kopie nicht erkennbar sind.

12. Ausweiskarte nach Anspruch 11, dadurch gekennzeichnet, daß die weitere Schicht ein Beugungsmuster, insbesondere eine Hologrammstruktur aufweist.

13. Ausweiskarte nach Anspruch 11, dadurch gekennzeichnet, daß die weitere Schicht Iriodine oder Perlglanzpigmente enthält.

14. Ausweiskarte nach Anspruch 11, dadurch gekennzeichnet, daß die weitere Schicht aus wenigstens einer Interferenzschicht besteht.

15. Ausweiskarte nach Anspruch 11, dadurch gekennzeichnet, daß die weitere Schicht eine zweite Metallschicht ist.

16. Ausweiskarte nach Anspruch 11, dadurch gekennzeichnet, daß die weitere Schicht von der Metallschicht durch eine transparente Zwischenschicht getrennt ist.

17. Ausweiskarte nach einem der Ansprüche 1, 2, 11, dadurch gekennzeichnet, daß das Kopierschutzelement auf der Kartenoberfläche aufgebracht ist.

18. Ausweiskarte nach einem der Ansprüche 1, 2, 11, dadurch gekennzeichnet, daß das Kopierschutzelement vollständig im Innern der Ausweiskarte liegt.

19. Ausweiskarte nach einem der Ansprüche 1, 2, 11, dadurch gekennzeichnet, daß die Ausweiskarte eine transparente Deckschicht aufweist, die eine Dicke von mehr als 50 % der Gesamtdicke der Karte aufweist.

20. Ausweiskarte nach einem der Ansprüche 1, 2, 11, dadurch gekennzeichnet, daß sich die Kennzeichnungen aus dem Kopierschutzelement in dem umliegenden Bereich der Ausweiskarte fortsetzen.

21. Ausweiskarte oder ähnlicher Datenträger mit einem, in wenigstens einem Teilbereich vorgesehenen Kopierschutzelement, welches eine einfallendes Licht gerichtet reflektierende Metallschicht und eine transparente, über der Metallschicht liegende lasersensibilisierte Schicht enthält, in die Kennzeichnungen in Form von Zeichen, Mustern oder ähnlichem mit einem Laserstrahl eingebracht sind, wobei die Kennzeichnungen in der lasersensibilisierten Schicht die Metallschicht lokal vollständig abdecken und für einfallende Strahlung absorbierend sind, so daß die Kennzeichnungen visuell gut lesbar, jedoch auf einer elektrofotographischen Kopie nicht erkennbar sind.

22. Ausweiskarte nach Anspruch 21, dadurch gekennzeichnet, daß die Kennzeichnungen schwarz sind.

23. Ausweiskarte nach Anspruch 21, dadurch gekennzeichnet, daß die über der Metallschicht liegende lasersensibilisierte Schicht eine Dicke von 0,5 bis 1 mm aufweist.

## Claims

1. An identity card or similar data carrier having a copy protection element provided in at least a partial area and containing a metal layer directly reflecting incident light in which markings in the form of characters, patterns or the like are incorporated with a laser beam by local, complete removal of the metal layer, the metal layer being underlaid at least in the area of the markings with a further, dark-colored layer, and the further layer absorbing radiation emitted by an electrophotographic copier such that the markings are not recognizable on a copy.

2. An identity card or similar data carrier having a copy protection element provided in at least a partial area and containing a metal layer directly reflecting incident light in which markings in the form of characters, patterns or the like are incorporated with a laser beam by local, complete removal of the metal layer, the metal layer being underlaid at least in the area of the markings with a further layer, and the further layer being blackened by the laser beam within the markings and absorbing radiation emitted by an electrophotographic copier such that the markings are not recognizable on a copy.

3. An identity card according to claim 1 or 2, characterized in that the metal layer is a high-gloss layer.

4. An identity card according to claim 1, characterized in that the further layer is black.

5. An identity card according to claim 1, characterized in that the further layer is designed as a black adhesive layer.

6. An identity card according to claim 1 or 2, characterized in that the markings form a semitone pattern reproduced from an original, the dark areas of the original being rendered at least partly by a demetalizing of the metal layer.

7. An identity card according to claim 6, characterized in that the dark areas of the original are rendered completely by demetalizing of the metal layer.

8. An identity card according to claim 6 or 7, characterized in that the semitone pattern is a picture.

9. An identity card according to any of claims 6 to 8, characterized in that the semitone pattern was incorporated by the grid method.

10. An identity card according to claim 1, characterized in that the further layer contains fluorescent or phosphorescent substances whose excitation spectrum differs from the spectrum of the copier's illumination source.

11. An identity card or similar data carrier having a copy protection element provided in at least a partial area and containing a metal layer directly reflecting incident light in which markings in the form of characters, patterns or the like are incorporated with a laser beam by local, complete removal of the metal layer, the metal layer being underlaid at least in the area of the markings with a further layer contrasting optically with the metal layer, and the further layer directly reflecting incident light so that the markings are not recognizable on an electrophotographic copy.

12. An identity card according to claim 11, characterized in that the further layer has a diffraction pattern, in particular a hologram structure.

13. An identity card according to claim 11, characterized in that the further layer contains iriodines or lustrous pigments.

14. An identity card according to claim 11, characterized in that the further layer comprises at least one interference layer.

15. An identity card according to claim 11, characterized in that the further layer is a second metal layer.

16. An identity card according to claim 11, characterized in that the further layer is separated from the metal layer by a transparent intermediate layer.

17. An identity card according to any of claims 1, 2, 11, characterized in that the copy protection element is applied to the card surface.

18. An identity card according to any of claims 1, 2, 11, characterized in that the copy protection element lies completely in the interior of the identity card.

19. An identity card according to any of claims 1, 2, 11, characterized in that the identity card has a transparent cover layer having a thickness of more than 50% of the total thickness of the card.

20. An identity card according to any of claims 1, 2, 11, characterized in that the markings continue from the copy protection element into the surrounding area of the identity card.

21. An identity card or similar data carrier having a copy protection element provided in at least a partial area and containing a metal layer directly reflecting incident light and a transparent laser-sensitized layer located above the metal layer, in which laser-sensitized layer markings in the form of characters, patterns or the like are incorporated with a laser beam, the markings in the laser-sensitized layer completely covering the metal layer locally and being absorbent for incident radiation so that the markings are readily readable visually but not recognizable on an electrophotographic copy.

22. An identity card according to claim 21, characterized in that the markings are black.

23. An identity card according to claim 21, characterized in that the laser-sensitized layer located above the metal layer has a thickness of 0.5 to 1 mm.

## Revendications

1. Carte d'identité ou support de données similaire comprenant un élément de protection contre les copies prévu dans au moins une zone partielle et qui contient une couche métallique réfléchissant une lumière dirigée de façon incidente, dans laquelle couche sont introduites des caractéristiques sous forme de caractères, de modèles ou similaires, avec un rayonnement laser par enlèvement local complet de la couche métallique, et dans laquelle la couche métallique est doublée au moins dans la zone des caractéristiques par une autre couche de couleur sombre, l'autre couche absorbant le rayonnement émis par un copieur électrophotographique, de telle façon que les caractéristiques ne puissent pas être reconnues sur une copie.

2. Carte d'identité ou support de données similaire comprenant un élément de protection contre les copies prévu dans au moins une zone partielle et qui contient une couche métallique réfléchissant une lumière dirigée de façon incidente, dans laquelle couche sont introduites des caractéristiques sous forme de caractères, de modèles ou similaires, avec un rayonnement laser par enlèvement local complet de la couche métallique, et dans laquelle la couche métallique est doublée au moins dans la zone des caractéristiques par une autre couche, l'autre couche étant noircie à l'intérieur des caractéristiques par le rayonnement laser et étant absorbé par le rayonnement émis par un copieur électrophotographique, de telle façon que les caractéristiques ne puissent pas être reconnues sur une copie.

3. Carte d'identité selon la revendication 1 ou 2, caractérisée en ce que la couche métallique est une couche à forte brillance ou à fini spéculaire.

4. Carte d'identité selon la revendication 1, caractérisée en ce que l'autre couche est noire.

5. Carte d'identité selon la revendication 1, caractérisée en ce que l'autre couche est réalisée sous la forme d'une couche collante noire.

6. Carte d'identité selon la revendication 1 ou 2, caractérisée en ce que les caractéristiques forment un modèle en demi-teinte reproduit à partir d'un original, dans lequel modèle au moins en partie les zones sombres de l'original sont rendues par une démétallisation de la couche métallique.

7. Carte d'identité selon la revendication 6, caractérisée en ce que les zones sombres de l'original sont rendues complètement par démétallisation de la couche métallique.

8. Carte d'identité selon la revendication 6 ou 7, caractérisée en ce que le modèle en demi-teinte est une image.

9. Carte d'identité selon l'une des revendications 6 à 8, caractérisée en ce que le modèle en demi-teinte est introduit par une technique de tramage.

10. Carte d'identité selon la revendication 1, caractérisée en ce que l'autre couche contient une substance fluorescente ou phosphorescente, dont le spectre d'excitation dépend du spectre de la source d'éclairage du copieur.

11. Carte d'identité ou support de données similaire, comprenant un élément de protection contre les copies prévu dans au moins une zone partielle et qui contient une couche métallique réfléchissant une lumière dirigée de façon incidente, dans laquelle couche sont introduites des caractéristiques sous forme de caractères, de modèles, ou similaires, avec un rayonnement laser par enlèvement local complet de la couche métallique, et dans laquelle la couche métallique est doublée au moins des caractéristiques par une autre couche formant un contraste optique avec la couche métallique, l'autre couche réfléchissant la lumière incidente de telle façon que les caractéristiques ne puissent pas être reconnues sur une copie électrophotographique.

12. Carte d'identité selon la revendication 11, caractérisée en ce que l'autre couche comporte un réseau de diffraction, en particulier une structure d'hologramme.

13. Carte d'identité selon la revendication 11, caractérisée en ce que l'autre couche contient de l'iriodine ou des pigments au lustre nacré.

14. Carte d'identité selon la revendication 11, caractérisée en ce que l'autre couche se compose d'au moins une couche d'interférence.

15. Carte d'identité selon la revendication 11, caractérisée en ce que l'autre couche est une deuxième couche métallique.

16. Carte d'identité selon la revendication 11, caractérisée en ce que l'autre couche est séparée de la couche métallique par une couche intermédiaire transparente.

17. Carte d'identité selon l'une des revendications 1, 2, 11, caractérisée en ce que l'élément de protection contre les copies est disposé sur la surface de la carte.

18. Carte d'identité selon l'une des revendications 1, 2 11, caractérisée en ce que l'élément de protection contre les copies est disposé complètement à l'intérieur de la carte d'identité.

19. Carte d'identité selon l'une des revendications 1, 2, 11, caractérisée en ce que la carte d'identité comporte une couche de recouvrement transparente qui présente une épaisseur supérieure à 50 % de l'épaisseur totale de la carte.

20. Carte d'identité selon l'une des revendications 1, 2, 11, caractérisée en ce que les caractéristiques de l'élément de protection contre les copies se prolongent dans la zone environnante de la carte d'identité.

21. Carte d'identité ou support de données similaire comprenant un élément de protection contre les copies prévu dans au moins une zone partielle et qui contient une couche métallique réfléchissant une lumière dirigée de façon incidente, et une couche transparente située au-dessus de la couche métallique et sensibilisée au laser, dans lesquelles couches sont introduites avec un rayonnement laser des caractéristiques sous la forme de caractères, de modèles, ou similaires, les caractéristiques dans la couche sensibilisée au laser recouvrant localement complètement la couche métallique et étant absorbantes à l'égard du rayonnement incident, de telle façon que les caractéristiques qui sont visuellement bien lisibles ne soient cependant pas reconnaissables sur une copie.

22. Carte d'identité selon la revendication 21, caractérisée en ce que les caractéristiques sont noires.

23. Carte d'identité selon la revendication 21, caractérisée en ce que la couche sensibilisée au laser qui est située au-dessus de la couche métallique présente une épaisseur de 0,5 à 1 mm.
